(19) Europäisches Patentamt
European Patent Office
Office européen des brevets

(11) EP 0 952 058 A2

(12) **EUROPÄISCHE PATENTANMELDUNG**

(43) Veröffentlichungstag:
27.10.1999 Patentblatt 1999/43

(51) Int. Cl.$^6$: **B60T 8/00**

(21) Anmeldenummer: 99102946.3

(22) Anmeldetag: 13.02.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 21.04.1998 DE 19817686

(71) Anmelder: WABCO GmbH
30453 Hannover (DE)

(72) Erfinder:
• Franke, Torsten
30459 Hannover (DE)

• Gläbe, Klaus
30161 Hannover (DE)
• Koschorek, Ralf
30952 Ronnenberg (DE)
• Reich, Thomas
30451 Hannover (DE)

(74) Vertreter: Schrödter, Manfred
WABCO GmbH,
Am Lindener Hafen 21
30453 Hannover (DE)

(54) **Verfahren zur Bestimmung einer Vergleichsgrösse**

(57) Es wird ein Verfahren zur Verarbeitung von Sensorsignalen in einem digitalen elektronischen System mit einem Mikroprozessor angegeben, bei aus den von den Sensoren abgegebenen Signalen rechnerisch Größen abgeleitet werden, die ihrerseits zur Erkennung bestimmter Situationen miteinander verglichen werden. Um diese Vergleiche mit einfachen Mitteln, d.h. mit preiswerten Sensoren und einem preiswerten Mikroprozessor unter Verwendung einfacher Rechenschritte, zuverlässig durchzuführen, wird der Vergleich zweier von den Sensorsignalen abgeleiteter Größen einmal auf der Ebene der Darstellung der einen Größe, z. B. einer Gierwinkelgeschwindigkeit, und daraufhin ein zweites Mal auf der Ebene der Darstellung der anderen Größe, wie z. B. einem Lenkwinkel, durchgeführt. Hierbei stützt das eine Vergleichsergebnis das andere. Das Verfahren wird vorzugsweise in einem Fahrzeug mit einer Einrichtung zur Fahrstabilitätsregelung verwendet, vorzugsweise zur Erkennung der Rückwärtsfahrt.

Fig. 1

EP 0 952 058 A2

**Beschreibung**

Die Erfindung betrifft ein Verfahren zur Bestimmung einer Vergleichsgröße, insbesondere einer Vergleichsgröße, die den Zustand eines rückwärts fahrenden Fahrzeuges anzeigt, gemäß dem Oberbegriff des Patentanspruchs 1.

Ein derartiges Verfahren ist aus der DE 195 15 051 A1 bekannt.

Das bekannte Verfahren sieht eine sogenannte Situationserkennung vor, die zur Unterscheidung von Fällen wie Geradeausfahrt, Kurvenfahrt, Rückwärtsfahrt und Stillstand eines Fahrzeuges dient. Die Unterscheidung derartiger Fahrzustände ist bei dem dortigen Verfahren für eine situationsabhängige Festlegung von Regelalgorithmen für ein System zur Fahrstabilitätsregelung erforderlich.

Bei der dortigen Situationserkennung wird beispielsweise als eine Vergleichsgröße der Zustand der Rückwärtsfahrt dadurch ermittelt, daß die von einem Sensor gemessene Gierwinkelgeschwindigkeit mit einer aus einem Lenkwinkel, der von einem weiteren Sensor gemessen wird, berechneten Gierwinkelgeschwindigkeit verglichen wird. Wenn die gemessene Gierwinkelgeschwindigkeit und die berechnete Gierwinkelgeschwindigkeit unterschiedliche Vorzeichen aufweisen und die zeitlichen Ableitungen dieser Großen ebenfalls unterschiedliche Vorzeichen aufweisen, dann wird bei dem bekannten Verfahren der Zustand der Rückwärtsfahrt erkannt.

Wie aus diesem Beispiel deutlich wird, sind bei derartigen Vergleichsverfahren mehrere Rechenschritte zur Umrechnung der von den Sensoren gemessenen Größen erforderlich, d.h. im zuvor genannten Beispiel sind dies eine Umrechnung des gemessenen Lenkwinkels in eine Gierwinkelgeschwindigkeit und anschließend eine zeitliche Differentiation von gemessener und berechneter Gierwinkelgeschwindigkeit. Um hierbei eine zuverlässige Erkennung der Rückwärtsfahrt bzw. eine gute Reproduzierbarkeit der Vergleichsergebnisse zu gewährleisten, müssen die Rechenschritte, die in der Praxis üblicherweise von einem Mikroprozessor ausgeführt werden, mit hoher Rechengenauigkeit ausgeführt werden. Zusätzlich wird in der Regel auch eine hohe Signalauflösung, d.h. kleine Quantisierungsschritte, bei den Sensoren und den ihnen eventuell nachgeschalteten Analog-/Digital-Wandlern erforderlich sein.

Die Ausführung der Rechenschritte mit hoher Rechengenauigkeit, z.B. mit Fließkommaarithmetik, erfordert eine hohe Rechenleistung des Mikroprozessors oder einen zusätzlichen Fließkomma-Prozessor, was aufwendig und teuer ist. Auch sind hochauflösende Sensoren und Analog-/Digital-Wandler kostenaufwendig.

Andererseits führt die Verwendung einfacherer Berechnungsmethoden, die aufgrund eines geringeren Bedarfes an Rechenleistung anstrebenswert wären, wie z.B. die generelle Verwendung ganzzahliger Größen in den Rechenschritten (sogenannte Integerarithmetik), zu Rechenfehlern, z. B. wenn bei der Division zweier Größen der Divisionsrest einfach fortgelassen wird. Insbesondere bei Anwendung mehrerer Rechenschritte dieser Art können derartige, dann kumuliert auftretende Rechenfehler zu unbefriedigenden Ergebnissen bei der Ermittlung einer Vergleichsgröße, z.B. für Rückwärtsfahrt, führen.

Der Erfindung liegt daher die Aufgabe zugrunde, ein Verfahren zur Bestimmung einer Vergleichsgröße durch Vergleich wenigstens zweier variabler Größen anzugeben, bei dem die Vergleichsgröße unter Verwendung preiswerter Schaltungsmittel und einfacher Rechenschritte relativ zuverlässig ermittelt wird.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Als Vergleichskriterium wird im folgenden sowohl ein einfacher Identitäts- oder Ähnlichkeitsvergleich zwischen zwei Größen als auch, wie im Ausführungsbeispiel beschrieben, eine Anwendung mehrerer Einzelkriterien in einem Vergleichsverfahren verstanden.

Die Erfindung hat den Vorteil, unter Verwendung einfacher Sensiermittel, Wandlermittel und Rechnermittel bei nur geringfügig erhöhtem Rechenaufwand, nämlich durch zweimaligen Vergleich derselben Größen, einmal in der Darstellungsart der ersten Größe und ein weiteres Mal in der Darstellungsart der zweiten Größe unter Verwendung z.B. von Integerarithmetik, eine deutliche Verbesserung der Vergleichsergebnisse zu ermöglichen. Ein weiterer Vorteil ist, daß durch die Verwendung eines zweiten Vergleichskriteriums bei dem zweiten Vergleich bestimmte, dem Vergleichskriterium inhärente feste Größen, wie z. B. Erkennungsschwellen, auf der Ebene der zweiten Darstellung unabhängig von dem ersten Vergleichskriterium festgelegt werden können. Es ist zwar auch möglich, die bei dem ersten Vergleichskriterium in der ersten Darstellung verwendeten Schwellen einfach durch Verwendung derselben Gesetzmäßigkeit, die zur Umrechnung der variablen Größen bzw. der von den Sensoren gemessenen Größen dient, in die zweite Darstellung umzurechnen, jedoch kann fallweise auch eine gesonderte Festlegung der Schwellen für das zweite Vergleichskriterium vorgenommen werden. Hierdurch ist das erfindungsgemäße Verfahren sehr einfach an unterschiedlichste Einsatzfälle anpaßbar und somit sehr flexibel einsetzbar.

In einer vorteilhaften Weiterbildung der Erfindung wird das Verfahren zur Erkennung der Rückwärtsfahrt bei einem Fahrzeug verwendet. In diesem Fall sind an dem Fahrzeug vorzugsweise Sensoren zur Sensierung einer Gierwinkelgeschwindigkeit, eines Lenkwinkels und einer Fahrzeuglängsgeschwindigkeit vorhanden. Vorteilhaft ist auch der zusätzliche oder alternative Einsatz von Sensoren zur Sensierung der Querbeschleunigung des Fahrzeuges und der Raddrehgeschwindigkeiten der einzelnen Räder.

Zur Erkennung der Rückwärtsfahrt wird der auch schon im eingangs erwähnten Stand der Technik beschriebene Effekt verwendet, gemäß dem einerseits die aus dem Signal des Gierwinkelgeschwindigkeit-Sensors gewonnene Gierwinkelgeschwindigkeit ihr Vorzeichen zwischen Vorwärts und Rückwärtsfahrt ändert, wogegen andererseits die üblicherweise eingesetzten Sensoren zur Ermittlung der Fahrzeuglängsgeschwindigkeit sowohl bei Vorwärts- als auch bei Rückwärtsfahrt immer den Betrag der wahren Fahrzeuggeschwindigkeit ermitteln. Dies hat zur Folge, daß die aus dem Lenkwinkel und der Fahrzeuglängsgeschwindigkeit berechnete Gierwinkelgeschwindigkeit bei Vorwärtsfahrt definitionsgemäß der gemessenen Gierwinkelgeschwindigkeit folgt, sofern kein instabiler Fahrzustand vorliegt, hingegen bei Rückwärtsfahrt die berechnete Gierwinkelgeschwindigkeit genau spiegelbildlich zur gemessenen Gierwinkelgeschwindigkeit verläuft.

Zur Erkennung des zuvor beschriebenen Verhaltens wird im eingangs erwähnten Stand der Technik unter anderem vorgeschlagen, die zu vergleichenden Größen zu differenzieren. Dieses bereitet in der Praxis, vor allem bei Einsatz in mikroprozessorgesteuerten Anlagen und aufgrund der eingangs beschriebenen Quantisierungsfehler, deutliche Schwierigkeiten, weil eine Differentiation in derartigen sowohl zeitdiskret als auch wertediskret arbeitenden Systemen durch Differenzenquotienten vorgenommen werden. Die Berechnung derartiger Differenzenquotienten mit hoher Genauigkeit ist mit einem großen Aufwand an Rechen- und Speicherkapazität verbunden und sollte daher vermieden werden.

Gemäß einer vorteilhaften Weiterbildung der Erfindung werden die mit der Differentiation der Signale verbundenen Nachteile dadurch vermieden, daß andere Vergleichskriterien herangezogen werden, die ausschließlich die nicht differenzierten Signale als Eingangsgrößen verwenden. So wird zunächst in dem ersten Vergleichskriterium, d. h. auf der Ebene der ersten Darstellung, zuerst geprüft, ob die gemessene Gierwinkelgeschwindigkeit und die aus dem Lenkwinkel und der Fahrzeuglängsgeschwindigkeit berechnete Gierwinkelgeschwindigkeit unterschiedliche Vorzeichen aufweisen und ob die Differenz der gemessenen und der berechneten Gierwinkelgeschwindigkeit vom Betrage her einen Mindestwert erreicht und ob die Summe dieser Größen vom Betrag her unterhalb eines Höchstwertes liegt. In dem zweiten Vergleichskriterium wird sodann auf der Ebene der zweiten Darstellung, d. h. als Lenkwinkel, geprüft, ob der gemessene Lenkwinkel und der aus der gemessenen Gierwinkelgeschwindigkeit und der Fahrzeuglängsgeschwindigkeit berechnete Lenkwinkel unterschiedliche Vorzeichen aufweisen und ob die Differenz des gemessenen Lenkwinkels zu dem berechneten Lenkwinkel vom Betrage her einen Mindestwert erreicht und ob die Summe dieser Lenkwinkel vom Betrage her unterhalb eines Höchstwertes liegt. Wenn dann bei wenigstens einem Vergleichskriterium alle drei Bedingungen, d. h. Vorzeichenunterschied und Betragsdifferenzbedingung und Betragssummenbedingung, erfüllt sind, dann wird auf den Zustand eines rückwärtsfahrenden Fahrzeuges geschlossen.

Die Erfindung wird im folgenden anhand eines Ausführungsbeispiels unter Zuhilfenahme einer Zeichnung näher erläutert.

Es zeigt

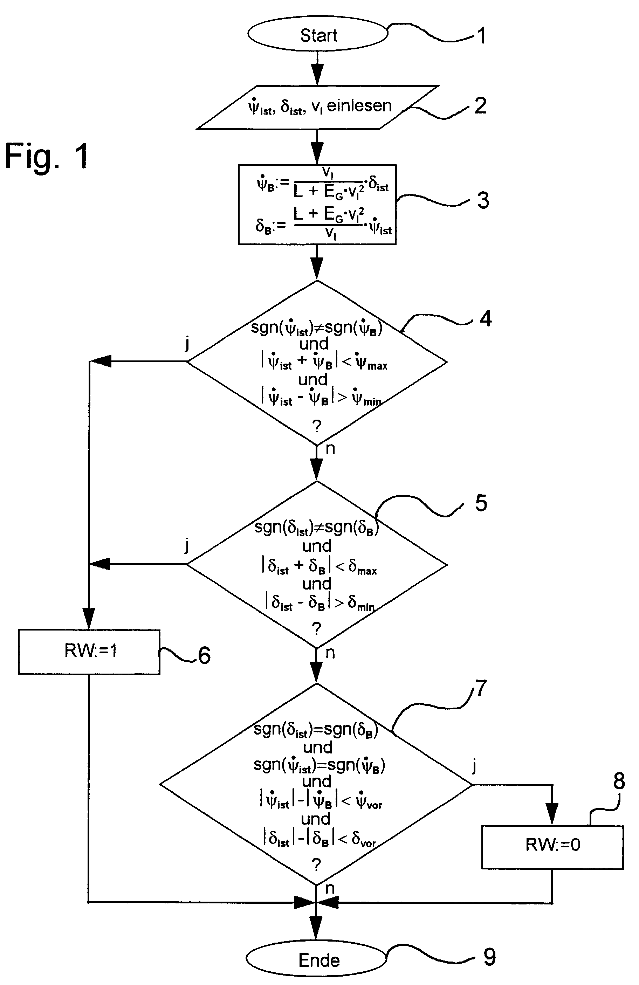

Fig. 1 eine schematische Darstellung des erfindungsgemäßen Verfahrens als Flußdiagramm.

Es wird im folgenden angenommen, daß das nachfolgend beschriebene Verfahren in einem Fahrzeug mit folgender Ausstattung verwendet wird:

- Es ist wenigstens ein Gierwinkelgeschwindigkeits-Sensor zur Messung des Istwertes der Gierwinkelgeschwindigkeit ($\dot{\psi}_{ist}$) des Fahrzeuges vorhanden. Als Gierwinkelgeschwindigkeit wird hierbei die Drehung des Fahrzeuges um seine Hochachse pro Zeiteinheit verstanden.

- Weiterhin ist ein Lenkwinkel-Sensor zur Messung des von dem Fahrer eingestellten Lenkwinkels ($\delta_{ist}$) vorhanden. Als Lenkwinkel wird hierbei nicht der Lenkrad-Drehwinkel verstanden, sondern die Winkelabweichung lenkbarer Räder von einer Parallelen zur Fahrzeuglängsachse.

- Außerdem ist ein Geschwindigkeitssensor zur Ermittlung der Fahrzeuglängsgeschwindigkeit ($v_1$), d.h. der Geschwindigkeit in Fahrtrichtung, vorhanden. Es ist auch möglich, daß die Fahrzeuglängsgeschwindigkeit ($v_1$) rechnerisch aus den Signalen von Raddrehgeschwindigkeitssensoren, wie sie z. B. für Antiblockiersysteme verwendet werden, als sogenannte Referenzgeschwindigkeit bestimmt wird. Ein entsprechendes Verfahren ist z. B. in der DE 40 16 668 C2 beschrieben.

- Des weiteren kann ein Querbeschleunigungssensor zur Ermittlung der Querbeschleunigung des Fahrzeugs eingesetzt werden.

Vorzugsweise weist das Fahrzeug auch noch eine Bremsanlage mit Radbremsen an jedem Rad und ein elektronisches Steuergerät, welches zur Verarbeitung der Sensorsignale dient und mittels Regelalgorithmen Ansteuersignale für die Radbremsen zur Vermeidung unerwünschter Zustände wie Untersteuern, Übersteuern bzw. Schleudern erzeugt, auf. Ein derartiges Fahrzeug wird auch als fahrstabilitätsgeregeltes Fahrzeug bezeichnet. Neben dem Begriff Fahrstabilitätsregelung haben sich jedoch auch schon andere Begriffe wie Fahrdynamikregelung, electronic stability control, cornering brake control usw. etabliert. Die vorliegende Erfindung ist bevorzugt bei derartigen Systemen einsetzbar.

Bei derartigen Systemen zur Fahrstabilitätsregelung ist es aufgrund von Gegebenheiten des Fahrzeuges erforderlich, für die Anwendung der Regelalgorithmen zwischen bestimmten Fahrzuständen, insbesondere Vorwärts- und Rückwärtsfahrt, zu unterscheiden. So ist das Fahrzeugverhalten z. B. eines typischen Nutzfahrzeuges mit lenkbarer Vorderachse und angetriebener Hinterachse zwischen Vorwärts- und Rückwärtsfahrt infolge der Funktionszuordnung zu den Achsen sehr unterschiedlich. Die Verwendung der für Vorwärtsfahrt optimierten Regelalgorithmen würde ohne besondere Maßnahmen bei Rückwärtsfahrt zu einer erschwerten Beherrschbarkeit des Fahrzeuges bei instabilen Fahrsituationen führen. Durch die nachfolgend beschriebenen Verfahrensschritte ist eine Unterscheidung zwischen Vorwärts- und Rückwärtsfahrt und somit eine Anwendung von für den jeweiligen Fahrzustand optimierten Regelalgorithmen möglich.

Das Verfahren gemäß Fig. 1 beginnt mit dem Block (1). In einem darauffolgenden Datentransferblock (2) werden die von den zuvor beschriebenen Sensoren ermittelten Größen Gierwinkelgeschwindigkeit ($\dot{\psi}_{ist}$), Lenkwinkel ($\delta_{ist}$) und Fahrzeuglängsgeschwindigkeit ($v_1$) eingelesen.

Es stehen nunmehr drei Größen mit drei verschiedenen physikalischen Darstellungen, nämlich Gierwinkelgeschwindigkeit, Lenkwinkel und Längsgeschwindigkeit, zur Verfügung. Zur Erkennung der Rückwärtsfahrt sollen aufgrund des bereits beschriebenen Effekts die Größen Gierwinkelgeschwindigkeit ($\dot{\psi}_{ist}$) und Lenkwinkel ($\delta_{ist}$) miteinander verglichen werden. Für einen Vergleich dieser Größen ist eine Umrechnung jeweils der einen Größe in die Darstellungsart der anderen Größe erforderlich.

Diese Umrechnung kann nach folgender physikalischen Beziehung erfolgen:

$$\dot{\psi} = \frac{v_1}{L + E_G \cdot v_1^2} \cdot \delta \qquad [1]$$

Hierbei sind L und $E_G$ von der Fahrzeuggeometrie abhängige Größen, wobei L den Radstand und $E_G$ den Eigenlenkgradienten angibt. Der Eigenlenkgradient ist für die hier betrachteten Fahrsituationen eine Fahrzeugkonstante, die für ein zweiachsiges Fahrzeug gemäß folgender Beziehung bestimmt wird:

$$E_G = \frac{m_{Fzg} \cdot (C_h \cdot L_h - C_v \cdot L_v)}{L \cdot C_v \cdot C_h} \qquad [2]$$

Hierbei bezeichnet $m_{Fzg}$ die Fahrzeugmasse, $L_h$ den Abstand der Hinterachse vom Fahrzeugschwerpunkt, $L_v$ den Abstand der Vorderachse vom Fahrzeugschwerpunkt, $C_v$ die Schräglaufsteifigkeit der Vorderachse und $C_h$ die Schräglaufsteifigkeit der Hinterachse. Diese Größen sind fahrzeugspezifisch durch Versuche zu ermitteln. Bezüglich der näheren Definition der zuvor genannten Größen wird auf die Norm DIN 77000 vom Januar 1994 verwiesen.

Unter Verwendung der Gleichung [1] werden sodann in einem Zuweisungsblock (3) aus dem gemessenen Lenkwinkel ($\delta_{ist}$) eine berechnete Gierwinkelgeschwindigkeit ($\dot{\psi}_B$) erzeugt. Des weiteren wird ebenfalls unter Verwendung des Zusammenhanges nach der Gleichung [1] aus der gemessenen Gierwinkelgeschwindigkeit ($\dot{\psi}_{ist}$) ein berechneter Lenkwinkel ($\delta_B$) bestimmt.

In einem nun folgenden Verzweigungsblock (4) werden die gemessenen Größen ($\dot{\psi}_{ist}$, $\delta_{ist}$) auf der Ebene der Darstellung der Gierwinkelgeschwindigkeit in einem drei Prüfschritte umfassenden Vergleichskriterium miteinander verglichen. Hierbei wird in einem ersten Prüfschritt geprüft, ob die gemessene Gierwinkelgeschwindigkeit ($\dot{\psi}_{ist}$) und die berechnete Gierwinkelgeschwindigkeit ($\dot{\psi}_B$) unterschiedliche Vorzeichen aufweisen ($Sgn(\dot{\psi}_{ist}) \neq sgn(\dot{\psi}_B)$). In einem zweiten Prüfschritt wird geprüft, ob die Summe der zuvor genannten Gierwinkelgeschwindigkeiten ($\dot{\psi}_{ist}$, $\dot{\psi}_B$) vom Betrage her unterhalb eines Höchstwertes ($\dot{\psi}_{max}$) liegt ($|\dot{\psi}_{ist} + \dot{\psi}_B| < \dot{\psi}_{max}$). In einem dritten Prüfschritt wird geprüft, ob die Differenz der Gierwinkelgeschwindigkeiten ($\dot{\psi}_{ist}$, $\dot{\psi}_B$) einen Mindestwert ($\dot{\psi}_{min}$) überschreitet ($|\dot{\psi}_{ist} - \dot{\psi}_B| > \dot{\psi}_{min}$). Nur wenn in jedem der drei Prüfschritte festgestellt wurde, daß die jeweilige Bedingung erfüllt ist, dann wird zu einem Zuweisungsblock (6) verzweigt. Falls eine Bedingung in einem der Prüfschritte nicht erfüllt ist, wird mit dem Verzweigungsblock (5) fortgefahren.

In dem Verzweigungsblock (5) wird analog zu dem Verzweigungsblock (4) das ebenfalls aus drei Prüfschritten bestehende zweite Vergleichskriterium ausgeführt, in dem die gemessenen Größen ($\dot{\psi}_{ist}$, $\delta_{ist}$) auf der Ebene der Darstellung des Lenkwinkels miteinander verglichen werden. Es werden die zuvor für den Verzweigungsblock (4) beschriebenen Prüfschritte analog ausgeführt, d.h. unter Verwendung des gemessenen Lenkwinkels ($\delta_{ist}$) und des berechneten

Lenkwinkels ($\delta_B$) sowie der für das zweite Vergleichskriterium angepaßten Höchst- bzw. Mindestwerte ($\delta_{max}$, $\delta_{min}$). Bei Erfüllung jeder der Bedingungen in den einzelnen Prüfschritten (sgn($\delta_{ist}$)$\neq$sgn($\delta_B$), $|\delta_{ist}+\delta_B|<\delta_{max}$, $|\delta_{ist}-\delta_B|>\delta_{min}$) wird ebenfalls zu dem Zuweisungsblock (6) verzweigt. Anderenfalls wird mit dem weiteren Verzweigungsblock (7) fortgefahren.

In dem Zuweisungsblock (6) wird zur Signalisierinng, daß Rückwärtsfahrt vorliegt, die Größe (RW), die die durch das erfindungsgemäße Verfahren ermittelte Vergleichsgröße darstellt, auf den Wert 1 gesetzt.

In dem Verzweigungsblock (7) werden in vier Prüfschritten die Rücksetzbedingungen für die Größe (RW) geprüft. Bei Erfüllung jeder der in diesen Prüfschritten angegebenen Bedingungen liegt keine Rückwärtsfahrt vor, d. h. das Fahrzeug steht oder fährt vorwärts. In dem ersten Prüfschritt des Verzweigungsblocks (7) wird auf Ebene der Darstellung des Lenkwinkels geprüft, ob die herangezogenen Größen ($\psi_{ist}$, $\delta_{ist}$) gleiche Vorzeichen aufweisen (sgn($\delta_{ist}$)=sgn($\delta_B$)). In dem zweiten Prüfschritt wird dieser Vergleich auf der Ebene der Darstellung der Gierwinkelgeschwindigkeit zur Stützung des vorigen Prüfschritts durchgeführt (sgn($\psi_{ist}$)=sgn($\psi_B$)). In dem dritten und dem vierten Prüfschritt wird wiederum auf der Ebene der Darstellung der Gierwinkelgeschwindigkeit und daraufhin auf der Ebene der Darstellung des Lenkwinkels geprüft, ob die Beträge der herangezogenen Größen ($\psi_{ist}$, $\delta_{ist}$) um weniger als eine für die jeweiligen Darstellungsebene vordefinierte Größe ($\psi_{vor}$, $\delta_{vor}$) voneinander abweichen ($||\psi_{ist}|-|\psi_B||<\psi_{vor}$, $||\delta_{ist}|-|\delta_B||<\delta_{vor}$). Bei Erfüllung jeder dieser Bedingungen wird zu dem Zuweisungsblock (8) verzweigt, indem die Größe (RW) auf den Wert Null gesetzt wird.

Das Verfahren endet daraufhin in dem Block (9).

Im realen Fahrbetrieb sind die in den Verzweigungsblöcken (4, 5, 7) verwendeten Bedingungen nicht immer erfüllt, d.h. es gibt Fahrsituationen, in denen diese Bedingungen keine Aussage über die Fahrtrichtung erlauben, z.B. bei schleuderndem Fahrzeug. In diesem Fällen bleibt der zuletzt erkannte Wert der Größe (RW) erhalten, bis wieder eine eindeutige Erkennung der Fahrtrichtung möglich ist. Solange keine eindeutige Erkennung möglich ist, werden nur die Blöcke (1, 2, 3, 4, 5, 7, 9) ausgeführt.

Für die zuvor beschriebenen Verfahrensschritte kann statt eines Lenkwinkels ($\delta_{ist}$) auch eine Querbeschleunigung ($a_q$) verwendet werden, sofern die Sensorausstattung des Fahrzeuges dies erlaubt. Die Umrechnung einer Querbeschleunigung in eine Gierwinkelgeschwindigkeit kann nach folgender Beziehung erfolgen:

$$\dot\psi = \frac{a_q}{v_1} \qquad\qquad [3]$$

Eine Umrechnung in einen Lenkwinkel ist entsprechend Gleichung [1] ebenfalls möglich.

Wenn sowohl für den Lenkwinkel als auch für die Querbeschleunigung Sensoren vorhanden sind, ist es vorteilhaft, die dann von den Sensoren gemessenen Größen ($\delta_{ist}$, $a_{q,ist}$) zur Ermittlung der erfindungsgemäßen Vergleichsgröße (RW) heranzuziehen. So ist es zur Stützung des Vergleichsergebnisses vorteilhaft, in dem ersten Vergleichskriterium gemäß Verzweigungsblock (4) die dort aufgeführten Prüfschritte ein weiteres Mal unter Verwendung der aus der Querbeschleunigung berechneten Gierwinkelgeschwindigkeit ($\psi_{B2}$, mit $\psi_{B2}=a_{q,ist}/v_1$) anstatt der aus dem Lenkwinkel berechneten Gierwinkelgeschwindigkeit ($\dot\psi_B$) durchzuführen, d.h. mit den zusätzlichen Prüfschritten (sgn($\psi_{ist}$)$\neq$sgn($\psi_{B2}$), $|\psi_{ist}+\psi_{B2}|<\psi_{max}$, $|\psi_{ist}-\psi_{B2}|>\psi_{min}$), und die Ergebnisse aller sechs Prüfschritte miteinander logisch zu verknüpfen, vorzugsweise als UND-Verknüpfung.

Es ist auch vorteilhaft, in einem dritten Vergleichskriterium den Vergleich gemäß Verzweigungsblock (4) in der Darstellungsart der Querbeschleunigung in analoger Weise durchzuführen, d.h. die Anwendung der drei Prüfschritte gemäß Verzweigungsblock (4) auf die gemessene Querbeschleunigung und eine aus der gemessenen Gierwinkelgeschwindigkeit berechneten Querbeschleunigung.

Hierfür sind dann entsprechende Höchst- bzw. Mindestwerte ($a_{max}$, $a_{min}$) festzulegen. Für das dritte Vergleichskriterium ist dann das Verfahren gemäß Fig. 1 um einen Verzweigungsblock (5a) zu erweitern, der zwischen den Verzweigungsblock (5, 7) angeordnet ist und bei positivem Vergleichsergebnis zu dem Zuweisungsblock (6) verzweigt. Die Prüfschritte in dem Verzweigungsblock (5a) lauten dann: sgn($a_{q,ist}$)$\neq$sgn($a_{q,B}$), $|a_{q,ist}+a_{q,B}|<a_{max}$, $|a_{q,ist}-a_{q,B}|>a_{min}$. Unter Heranziehung der Gleichung [3] berechnet sich $a_{q,B}$ hierfür als $a_{q,B}=\psi_{ist} \cdot v_1$.

Die Ausgangsgröße des Verfahrens, nämlich die Größe (RW) kann in weiteren Regel- und Steuerverfahren verwendet werden, z.B. für die Verwendung spezieller Regelalgorithmen für Vorwärtsfahrt und Rückwärtsfahrt. Es ist auch möglich, die Größe (RW) zur Ansteuerung von Anzeigeelementen, wie z. B. einem Rückfahrscheinwerfer, einzusetzen.

Die in den Vergleichskriterien bzw. den Prüfschritten verwendeten Erkennungsschwellen ($\psi_{min}$, $\psi_{max}$, $\psi_{vor}$, $\delta_{min}$, $\delta_{max}$, $\delta_{vor}$, $a_{min}$, $a_{max}$) sind für den jeweiligen Fahrzeugtyp fallweise durch Versuche zu ermitteln. Eine für zweiachsige Fahrzeuge üblicher Auslegung geeignete Wertekombination ist nachfolgend angegeben:

| $\dot\psi_{min}$: 2°/s | $\dot\psi_{max}$: 2°/s | $\dot\psi_{vor}$: 1°/s |
|---|---|---|
| $\delta_{min}$: 15° | $\delta_{max}$: 15° | $\delta_{vor}$: 10° |
| $a_{min}$: 1,5m/s$^2$ | $a_{max}$: 1,5m/s$^2$ | |

## Patentansprüche

1. Verfahren zur Bestimmung einer Vergleichsgröße mit folgenden Merkmalen:

   a) es ist eine erste variable Größe, wie z.B. eine Gierwinkelgeschwindigkeit ($\dot\psi_{ist}$), mit einer ersten Darstellung vorhanden,

   b) es ist eine zweite variable Größe, wie z.B. ein Lenkwinkel ($\delta_{ist}$), mit einer zweiten Darstellung vorhanden,

   c) zwischen den Darstellungen der ersten und der zweiten variablen Größe besteht eine Gesetzmäßigkeit,

   d) die erste und die zweite variable Größe werden in einem ersten Vergleichskriterium (4) auf der Ebene der ersten Darstellung miteinander verglichen,
   <u>gekennzeichnet durch folgendes Merkmal:</u>

   e) zur Stützung des Vergleichsergebnisses werden die erste und die zweite variable Größe in einem zweiten Vergleichskriterium (5) auf der Ebene der zweiten Darstellung miteinander verglichen.

2. Verfahren nach Patentanspruch 1, <u>dadurch gekennzeichnet,</u> daß die Ergebnisse des ersten und des zweiten Vergleichskriteriums miteinander logisch verknüpft werden.

3. Verfahren nach Patentanspruch 2, <u>dadurch gekennzeichnet,</u> daß die logische Verknüpfung eine ODER-Verknüpfung ist.

4. Verfahren nach einem der vorhergehenden Patentansprüche, <u>dadurch gekennzeichnet,</u> daß die die Darstellungen der ersten und der zweiten variablen Größe verbindende Gesetzmäßigkeit eine weitere variable Größe ($v_1$) aufweist.

5. Verfahren nach einem der vorhergehenden Patentansprüche, <u>dadurch gekennzeichnet,</u> daß die erste, die zweite und/oder weitere variable Größen aus Signalen von Sensoren ermittelt werden.

6. Verfahren nach einem der vorhergehenden Patentansprüche, <u>dadurch gekennzeichnet,</u> daß Sensoren vorhanden sind zur Sensierung einer Fahrzeuglängsgeschwindigkeit und/oder eines Lenkwinkels und/oder einer Querbeschleunigung und/oder einer Gierwinkelgeschwindigkeit und/oder Raddrehgeschwindigkeiten.

7. Verfahren nach Patentanspruch 6, wobei das Vergleichsergebnis den Zustand eines rückwärtsfahrenden Fahrzeuges anzeigt, <u>gekennzeichnet durch folgende Merkmale:</u>

   a) zur Ermittlung der Vergleichsgröße wird als erste Größe die Gierwinkelgeschwindigkeit ($\dot\psi_{ist}$) und als zweite Größe der Lenkwinkel ($\delta_{ist}$) herangezogen,

   b) in dem ersten (4) und dem zweiten (5) Vergleichskriterium wird jeweils separat geprüft, ob die herangezogenen Größen auf der jeweiligen Darstellungsebene unterschiedliche Vorzeichen aufweisen und ob die Differenz der herangezogenen Größen vom Betrage her einen Mindestwert erreicht und ob die Summe der herangezogenen Größen vom Betrage her unterhalb eines Höchstwertes liegt,

   c) wenn bei wenigstens einem Vergleichskrierium alle unter b) genannten Bedingungen erfüllt sind, wird auf den Zustand eines rückwärtsfahrenden Fahrzeuges geschlossen.

**Fig. 1**

```
                    ( Start )  —————— 1
                        │
                        ▼
        ╱‾‾‾‾‾‾‾‾‾‾‾‾‾‾‾‾‾‾‾‾‾‾╱
       ╱ ψ̇_ist, δ_ist, v_I einlesen ╱ —— 2
      ╱‾‾‾‾‾‾‾‾‾‾‾‾‾‾‾‾‾‾‾‾‾‾╱
                        │
                        ▼
```

$$\dot{\psi}_B := \frac{v_I}{L + E_G \cdot v_I^2} \cdot \delta_{ist}$$

$$\delta_B := \frac{L + E_G \cdot v_I^2}{v_I} \cdot \dot{\psi}_{ist}$$

— 3

— 4

$$\text{sgn}(\dot{\psi}_{ist}) \neq \text{sgn}(\dot{\psi}_B)$$
$$\text{und}$$
$$|\dot{\psi}_{ist} + \dot{\psi}_B| < \dot{\psi}_{max}$$
$$\text{und}$$
$$|\dot{\psi}_{ist} - \dot{\psi}_B| > \dot{\psi}_{min}$$
$$?$$

j → / n ↓

— 5

$$\text{sgn}(\delta_{ist}) \neq \text{sgn}(\delta_B)$$
$$\text{und}$$
$$|\delta_{ist} + \delta_B| < \delta_{max}$$
$$\text{und}$$
$$|\delta_{ist} - \delta_B| > \delta_{min}$$
$$?$$

j → / n ↓

RW:=1 — 6

— 7

$$\text{sgn}(\delta_{ist}) = \text{sgn}(\delta_B)$$
$$\text{und}$$
$$\text{sgn}(\dot{\psi}_{ist}) = \text{sgn}(\dot{\psi}_B)$$
$$\text{und}$$
$$|\dot{\psi}_{ist}| - |\dot{\psi}_B| < \dot{\psi}_{vor}$$
$$\text{und}$$
$$|\delta_{ist}| - |\delta_B| < \delta_{vor}$$
$$?$$

j → RW:=0 — 8

n ↓

( Ende ) — 9